# EUROPÄISCHE PATENTSCHRIFT

(11) **EP 2 295 284 B1**
(45) Veröffentlichungstag und Bekanntmachung des Hinweises auf die Patenterteilung: **05.10.2016**
(21) Anmeldenummer: 10009381.4
(22) Anmeldetag: 09.09.2010
(51) Int. Cl.: B60N 2/07, B60N 2/12

(54) **Fahrzeugsitz**
Vehicle seat
Siège de véhicule

(30) Priorität: 10.09.2009 DE 102009040750
(43) Veröffentlichungstag der Anmeldung: 16.03.2011
(73) Patentinhaber: Johnson Controls GmbH, 51399 Burscheid (DE)
(72) Erfinder: Sooda, Jeevan, 51399 Burscheid (DE); Deshmukh, Harshal, 51399 Burscheid (DE); Woolston, Stuart, Glasgow G75 8TZ (GB)
(74) Vertreter: Schwöbel, Thilo K.

(56) Entgegenhaltungen:
- FR-A1- 2 867 428
- FR-A1- 2 888 539

## Beschreibung

Die Erfindung betrifft einen Fahrzeugsitz, insbesondere für ein Kraftfahrzeug, mit mindestens einer Gebrauchsstellung und einer den Zugang zu einem dahinter angeordneten weiteren Fahrzeugsitz erleichternden Zugangsstellung (Easy-Entry-Position).

Ein derartiger Sitz ist nach dem Oberbegriff des Anspruchs 1 aus der FR 2 867 428 A1 bekannt.

Der Erfindung liegt die Aufgabe zugrunde, eine sichere und weit öffnende Zugangsstellung mit einfachen Mitteln bereitzustellen.

Gelöst wird diese Aufgabe erfindungsgemäß durch einen Fahrzeugsitz nach Anspruch 1.

Bevorzugt ist vorgesehen, dass die Raste des Sitzes an einer Unterschiene angeordnet ist, wobei die Unterschiene an einer Bodenstruktur eines Kraftfahrzeugs befestigbar ist. Dadurch ist vorteilhaft eine besonders einfache Integration des Verschiebungsbegrenzungsmittels in ein herkömmliches Schienensystem mit Oberschiene und Unterschiene möglich.

Bevorzugt ist vorgesehen, dass der drehbare Hebel des Sitzes an einem Entriegelungsmittel angeordnet ist, wobei der Fahrzeugsitz zur Überführung aus der Gebrauchsstellung in die Zugangsstellung durch das Entriegelungsmittel entriegelbar ist. Dadurch ist vorteilhaft keine Anordnung des Verschiebungsbegrenzungsmittels im Innem der Unter- und Oberschiene notwendig, sodass eine vergleichsweise einfache Realisierung der Verschiebungsbegrenzung möglich ist.

Bevorzugt ist vorgesehen, dass das Entriegelungsmittel durch ein Kraftmittel betätigbar ist, wobei das Kraftmittel bevorzugt eine Handhabe mit einem Seilzug aufweist. Dadurch ist vorteilhaft eine besonders einfache und kostengünstige Betätigung des Entriegelungsmittels möglich.

Bevorzugt ist vorgesehen, dass die Verriegelung in der Zugangsstellung durch Zurückziehen des Fahrzeugsitzes entriegelbar ist. Dadurch ist vorteilhaft eine besonders komfortable Entriegelung durch den auf der Rücksitzbank sitzenden Insassen möglich.

Bevorzugt ist vorgesehen, dass die Rückenlehne beim Überführen des Fahrzeugsitzes aus der Gebrauchsstellung in die Zugangsstellung auf die Sitzstruktur schwenkbar ist. Dadurch ist vorteilhaft ein größerer Zugangsraum für die Insassen erreichbar.

### Figuren

Die Figuren stellen beispielhaft und schematisch eine Ausführung der Erfindung dar.

Es zeigen:
- **Figur 1**: eine seitliche Ansicht der Struktur eines erfindungsgemäßen Fahrzeugsitzes in Gebrauchsstellung;
- **Figur 2**: den in Fig. 1 gezeigten Mechanismus in rückseitiger Ansicht;
- **Figur 3**: den Fahrzeugsitz nach Fig. 1 in einer Zwischenstellung;
- **Figur 4**: den Fahrzeugsitz nach Fig. 1 in Zugangsstellung (Easy-Entry).

Der in den Figuren dargestellte Fahrzeugsitz 1 umfasst eine Lehnenstruktur 2 für die Rückenlehne 3 und eine rudimentär dargestellte Sitzstruktur 4 für das Sitzteil. Die Sitzstruktur 4 ist auf einem Schienensystem 5 mit einer Unterschiene 6 und einer Oberschiene 7 entlang einer ersten Achse X in und gegen die Fahrtrichtung (-X/X-Richtung des Fahrzeugs) verschieblich angeordnet.

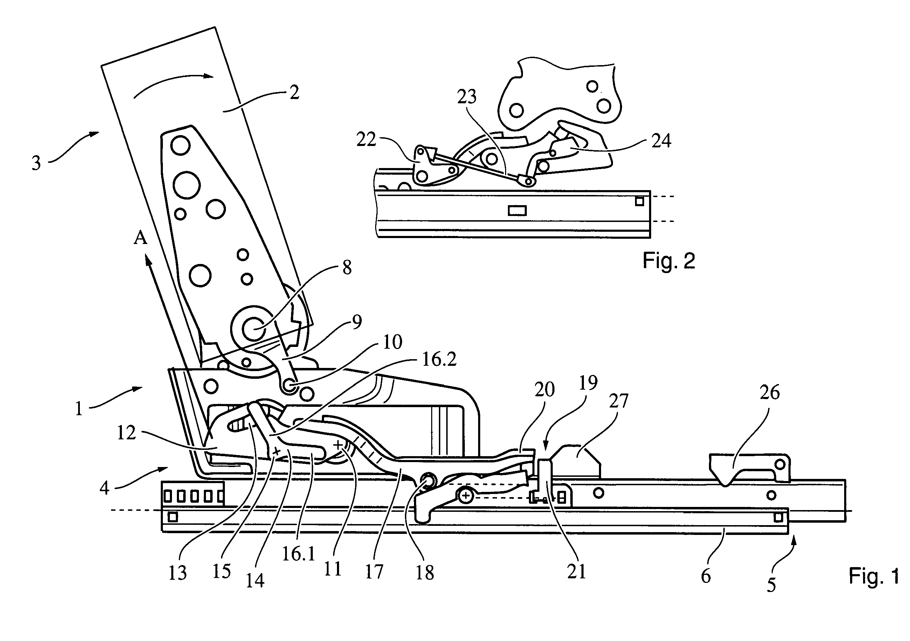

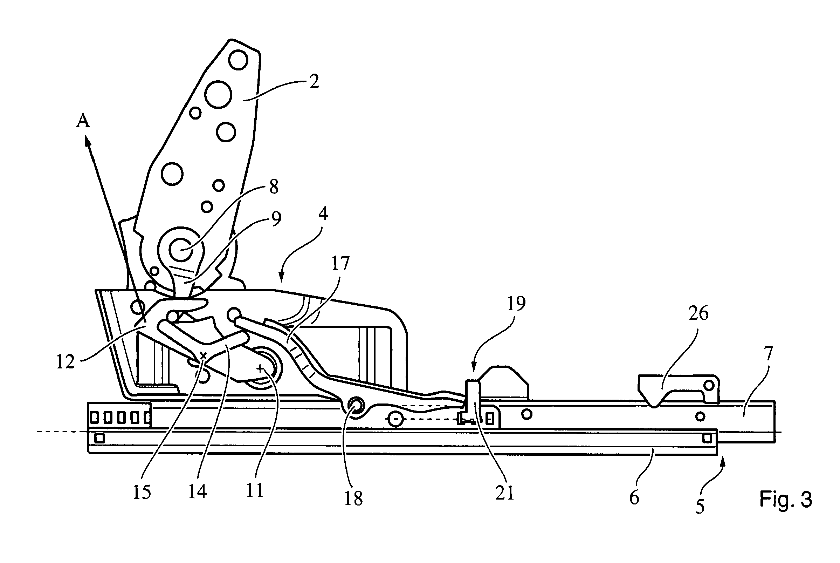

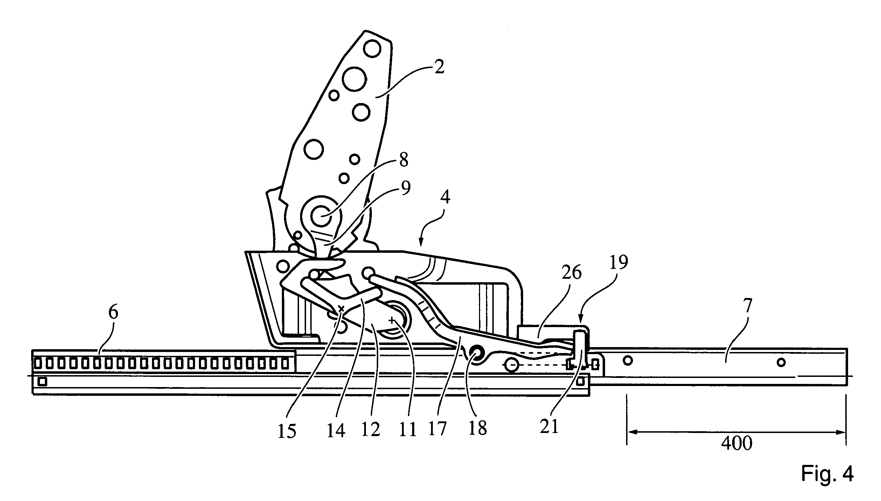

Die Rückenlehne 3 ist um eine Drehachse 8 aus ihrer leicht nach hinten geneigten Gebrauchsstellung (Fig. 1) nach vorne (Pfeil B) in eine nach vorne geneigte Nichtgebrauchstellung (Fig. 3 und 4) schwenkbar. Die Lehnenstruktur 2 ist drehfest mit einem unterhalb der Drehachse 8 nach unten auskragenden Hebel 9 verbunden, der seinerseits mit einem seitlich auskragenden Bolzen 10 versehen ist.

Die Sitzstruktur 4 weist eine um eine Drehachse 11 schwenkbare Beschlagplatte 12 auf, die mit einer bogenförmigen, nach vorne offenen Kulisse 13 ausgestattet ist. Die Drehachse 11 befindet sich am vorderen Ende der Beschlagplatte 12, deren hinteres Ende mittels eines Kraftmittels aus ihrer in Fig. 1 gezeigten Ausgangsstellung in Richtung des Pfeils A in die in Fig. 3 und 4 gezeigte Funktionsstellung angehoben werden kann. Das Kraftmittel kann beispielsweise aus einem mit einer Handhabe wirkverbundenen Bowdenzug bestehen. In angehobener Stellung der Beschlagplatte 12 verläuft die Kulisse 13 koaxial zur Drehachse 8 der Rückenlehne 3 mit einem Radius, welcher dem Abstand zwischen Drehachse 8 und Bolzen 10 entspricht.

Beim Anheben der Beschlagplatte 12 wird die Rückenlehne 3 entriegelt und kann um die Drehachse 8 nach vorne geschwenkt werden, wobei der Bolzen 10 in die Kulisse 13 einläuft und mit Erreichen des Endes der Kulisse 13 die Schwenkbewegung begrenzt (siehe Fig. 3).

An der Beschlagplatte 12 ist ferner ein Winkelstück 14 um eine Drehachse 15 drehbar gelagert, das zwei von der Drehachse 15 abragende Schenkel 16.1, 16.2 aufweist. Die Schenkel 16.1, 16.2 schließen im Ausführungsbeispiel einen Winkel von von etwa 125° ein, wobei der Schenkel 16.1 in der in Fig. 1 gezeigten Ausgangsstellung etwa waagerecht nach vorne ragt, während der Schenkel 16.2 schräg nach oben und hinten gerichtet ist und dabei den vorderen Teil der Kulisse 13 teilweise überdeckt. Beim Vorklappen der Rückenlehne wird das Winkelstück 14 durch Kontakt des Bolzens 10 mit dem Schenkel 16.2 nach hinten (in der Ansicht auf die linke Sitzseite nach Fig. 1 also gegen den Uhrzeigersinn) verdreht, wobei der nach vorne gerichtete Schenkel 16.1 angehoben wird (Fig. 3). Dabei wirkt der Schenkel 16.1 auf einen weiteren Hebel 17 ein, der um eine Drehachse 18 drehbar an der Oberschiene 7 gelagert ist und bei Betätigung die Schienenverriegelung 19 entsperrt. Der Fahrzeugsitz 1 kann nun aus der Zwischenstellung nach Fig. 3 in die Zugangsstellung nach Fig. 4 nach vorne verschoben werden. Ein am vorderen Schenkel des Hebels 17 befindlicher Verriegelungsbolzen 20 wirkt dabei in vorderer Endstellung auf auf eine Raste 26 ein, welche den Fahrzeugsitz 1 lösbar in der Zugangsstellung hält. Beim Zurückziehen des Fahrzeugsitzes 1 gerät der Verriegelungsbolzen 20 außer Eingriff mit der Raste 26. Ferner kommt ein an der Sitzstruktur 4 drehbar gelagerter Drehhebel 22 (Fig. 2) in Kontakt mit einer beidseits rampenförmig ausgebildeten Nockenplatte 27. Der Kontur der Nockenplatte 27 folgend wird der Drehhebel 22 verdreht und verlagert dabei eine Übertragungsstange 23, welche mit ihrem anderen Ende gegensinnig auf einen schwenkbaren Sperrnocken 24 wirkt. Der Spermocken 24 sperrt den Bolzen 10 bei vorgeklappter Rückenlehne 3 in der Kulisse 13, so dass ein Zurückklappen der Rückenlehne 3 erst dann möglich ist, wenn der Fahrzeugsitz 1 wieder zurückgezogen worden ist. Alle Komponenten drehen nun in die Ausgangsstellung nach Fig. 1 zurück.

### Bezugszeichenliste:

- 1: Fahrzeugsitz
- 2: Lehnenstruktur
- 3: Rückenlehne
- 4: Sitzstruktur
- 5: Schienensystem
- 6: Unterschiene
- 7: Oberschiene
- 8: Drehachse
- 9: Hebel
- 10: Bolzen
- 11: Drehachse
- 12: Beschlagplatte
- 13: Kulisse
- 14: Winkelstück
- 15: Drehachse
- 16.1, 16.2: Schenkel
- 17: Hebel
- 18: Drehachse
- 19: Schienenverriegelung
- 20: Verriegelungsbolzen
- 21: Aktuierungshebel
- 22: Drehhebel
- 23: Übertragungsstange
- 24: Spermocken
- 25: Nockenplatte
- 26: Raste
- 27: Nockenplatte

## Patentansprüche

1. Fahrzeugsitz (1), wobei der Fahrzeugsitz (1) aus einer Gebrauchsstellung in eine Zugangsstellung überführbar ist, wobei der Fahrzeugsitz (1) eine Lehnenstruktur (2) für die Rückenlehne (3) und eine Sitzstruktur (4) aufweist, wobei der Fahrzeugsitz (1) entlang einer Achse (X) verschieblich auf einem eine Oberschiene (7) und eine Unterschiene (6) umfassenden Schienensystem (5) gelagert ist, **dadurch gekennzeichnet, dass** der Fahrzeugsitz (1) ein Verschiebungsbegrenzungsmittel aufweist, wobei das Verschiebungsbegrenzungsmittel eine Verschiebung des Fahrzeugsitzes (1) entlang der Achse (X) beim Überführen des Fahrzeugsitzes (1) aus der Gebrauchsstellung in die Zugangsstellung begrenzt, wobei wobei der Fahrzeugsitz (1) in der Zugangsstellung durch das Verschiebungsbegrenzungsmittel verriegelbar ist, wobei das Verschiebungsbegrenzungsmittel eine Raste (26) und einen Verriegelungsbolzen (20) aufweist, wobei in der Zugangsstellung die Raste (26) mit dem Verriegelungsbolzen (20) zusammenwirkt,
**dadurch gekennzeichnet, dass**
der Fahrzeugsitz einen an der Oberschiene (7) gelagerten und um eine Drehachse (18) zwischen einem vorderen und einem hinteren Schenkel drehbaren Hebel (17) aufweist, der bei Betätigung eine Schienenverriegelung (19) des Fahrzeugsitzes (1) entsperrt, wobei am vorderen Schenkel des Hebels (17) der Verriegelungsbolzen (20) angeordnet ist und in der Zugangsstellung auf die Raste (26) einwirkt.

2. Fahrzeugsitz (1) nach Anspruch 1, **dadurch gekennzeichnet, dass** die Raste (26) an der Unterschiene (6) angeordnet ist, wobei die Unterschiene (6) an einer Bodenstruktur eines Kraftfahrzeugs befestigbar ist.

3. Fahrzeugsitz (1) nach einem der vorhergehenden Ansprüche, **dadurch gekennzeichnet, dass** der drehbare Hebel (17) an einem Entriegelungsmittel angeordnet ist, wobei der Fahrzeugsitz (1) zur Überführung aus der Gebrauchsstellung in die Zugangsstellung durch das Entriegelungsmittel entriegelbar ist.

4. Fahrzeugsitz (1) nach Anspruch 3, **dadurch gekennzeichnet, dass** das Entriegelungsmittel durch ein Kraftmittel betätigbar ist, wobei das Kraftmittel bevorzugt eine Handhabe mit einem Seilzug aufweist.

5. Fahrzeugsitz (1) nach einem der vorhergehenden Ansprüche, **dadurch gekennzeichnet, dass** die Verriegelung in der Zugangsstellung durch Zurückziehen des Fahrzeugsitzes (1) entriegelbar ist.

6. Fahrzeugsitz (1) nach einem der vorhergehenden Ansprüche, **dadurch gekennzeichnet, dass** die Rückenlehne (3) beim Überführen des Fahrzeugsitzes (1) aus der Gebrauchsstellung in die Zugangsstellung auf die Sitzstruktur (4) schwenkbar ist.

## Claims

1. Vehicle seat (1), wherein the vehicle seat (1) can be converted from a use position to an access position, wherein the vehicle seat (1) comprises a backrest structure (2) for the backrest (3) and a seat structure (4), wherein the vehicle seat (1) is mounted in a manner displaceable along an axis (X) on a rail system (5) comprising an upper rail (7) and a lower rail (6), **characterised in that**, the vehicle seat (1) comprises a displacement limiting means, wherein the displacement limiting means limits a displacement of the vehicle seat (1) along the axis (X) during the conversion of the vehicle seat (1) from the use position to the access position, wherein the vehicle seat (1) can be locked in the access position by the displacement limiting means, wherein the displacement limiting means comprises a latch (26) and a locking pin (20), wherein, in the access position, the latch (26) cooperates with the locking pin (20),
**characterised in that**,
the vehicle seat comprises a lever (17) mounted on the upper rail (7) and rotatable about a rotational axis (18) between a front and a rear arm, which, in the case of activation, releases a rail lock (19) of the vehicle seat (1), wherein the locking pin (20) is arranged on the front arm of the lever (17) and acts on the latch (26) in the access position.

2. Vehicle seat (1) according to claim 1, **characterised in that** the latch (26) is arranged on the lower rail (6), wherein the lower rail (6) can be attached to a base structure of a motor vehicle.

3. Vehicle seat (1) according to one of the preceding claims, **characterised in that** the rotatable lever (17) is arranged on an unlocking means, wherein the vehicle seat (1) can be unlocked by the unlocking means for the conversion from the use position to the access position.

4. Vehicle seat (1) according to claim 3, **characterised in that** the unlocking means can be activated by a force means, wherein the force means preferably comprises a handle with a rope pull.

5. Vehicle seat (1) according to one of the preceding claims, **characterised in that**, in the access position, the lock can be unlocked by pulling back the vehicle seat (1).

6. Vehicle seat (1) according to one of the preceding claims, **characterised in that**, during conversion of the vehicle seat (1) the backrest (3) can be pivoted on the seat structure (4) from the use position to the access position.

## Revendications

1. Siège pour véhicule (1), où le siège pour véhicule (1) peut passer d'une position d'utilisation à une position d'accès, où le siège pour véhicule (1) présente une structure d'appui (2) pour un dossier (3) et une structure de siège (4), où le siège pour véhicule (1) peut coulisser le long d'un axe (X) sur un système de glissières (5) comprenant une glissière supérieure (7) et une glissière inférieure (6), **caractérisé en ce que** le siège pour véhicule (1) présente un moyen limiteur de déplacement, où le moyen limiteur de déplacement permet de limiter le déplacement du siège pour véhicule (1) le long de l'axe (X) lors du passage du siège pour véhicule (1) de la position d'utilisation à la position d'accès, où le siège pour véhicule (1) est verrouillable dans la position d'accès grâce au moyen limiteur de déplacement, où le moyen limiteur de déplacement présente un loquet (26) et un boulon de verrouillage (20), où dans la position d'accès, le loquet (26) coopère avec le boulon de verrouillage (20),
**caractérisé en ce que**
le siège pour véhicule présente un levier rotatif (17) autour d'un axe de rotation (18) entre une branche avant et une branche arrière, levier reposant sur la glissière supérieure (7) et qui une fois actionné libère un verrouillage de glissière (19) du siège pour véhicule (1), où le boulon de verrouillage (20) est agencé au niveau de la branche avant du levier (17) et agit sur le loquet (26) dans la position d'accès.

2. Siège pour véhicule (1) selon la revendication 1, **caractérisé en ce que** le loquet (26) est agencé au niveau de la glissière inférieure (6), où la glissière inférieure (6) peut être fixée au niveau d'une structure de plancher d'un véhicule à moteur.

3. Siège pour véhicule (1) selon l'une des revendications précédentes, **caractérisé en ce que** le levier rotatif (17) est agencé au niveau d'un moyen de déverrouillage, où le siège pour véhicule (1) peut être déverrouillé par le moyen de déverrouillage pour passer de la position d'utilisation à la position d'accès.

4. Siège pour véhicule (1) selon la revendication 3, **caractérisé en ce que** le moyen de déverrouillage est actionnable par un moyen d'actionnement, lequel moyen d'actionnement est de préférence une poignée avec un câble.

5. Siège pour véhicule (1) selon l'une des revendications précédentes, **caractérisé en ce qu'**il suffit de tirer le siège pour véhicule (1) vers l'arrière pour le déverrouiller et passer en position d'accès.

6. Siège pour véhicule (1) selon l'une des revendications précédentes, **caractérisé en ce que** le dossier (3) est pivotable sur la structure de siège (4) lorsque le siège pour véhicule (1) passe de la position d'utilisation à la position d'accès.
